# EUROPÄISCHE PATENTANMELDUNG

(11) **EP 0 610 792 A1**
(43) Veröffentlichungstag der Anmeldung: **17.08.1994**
(21) Anmeldenummer: 94101547.1
(22) Anmeldetag: 02.02.1994
(51) Int. Cl.: B65G 69/28

(54) **Überfahrbrücke für Rampen**

(30) Priorität: 12.02.1993 DE 4304210
(71) Anmelder: Grunewald, Hans-Joachim, D-25368 Kiebitzreihe (DE)
(72) Erfinder: Grunewald, Hans-Joachim, D-25368 Kiebitzreihe (DE)
(74) Vertreter: Vonnemann, Gerhard, Dr.-Ing.

(57) **Zusammenfassung**

Die Erfindung betrifft eine Überfahrbrücke mit einer von mindestens einer Kolben-Zylinder-Einheit um eine Schwenkachse bewegliche Brückenplatte, wobei die Kolben-Zylinder-Einheit eine Achse aufweist, die gegenüber einer zur Schwenkachse der Brückenplatte senkrechten Ebene geneigt ist.

## Beschreibung

Die Erfindung betrifft eine Überfahrbrücke mit einer von mindestens einer Kolben-Zylinder-Einheit um eine Schwenkachse bewegliche Brückenplatte.

Eine solche Überfahrbrücke für Rampen ist aus der deutschen Patentschrift 23 21 033 bekannt. Dabei schwenkt eine Kolben-Zylinder-Einheit, die in der senkrecht zur Schwenkachse liegenden Symmetrieebene der Brücke angeordnet ist, die Brückenplatte. Das ortsfeste Auflager der Kolben-Zylinder-Einheit stützt sich direkt auf dem Boden eines Rampenausschnitts ab, dessen Niveau dem der Verkehrsfläche entspricht. Der ortsveränderliche Anlenkpunkt der Kolben-Zylinder-Einheit ist mit der Brückenplatte verbunden, deren Niveau in etwa dem Niveau der Rampenhöhe entspricht. Auf diese Weise ergibt sich ein Abstand, der ausreicht, die für den vorgesehenen Hub erforderliche Kolben-Zylinder-Einheit einzubauen.

Schwieriger sind Situationen, in denen die Überfahrbrücke so gestaltet sein muß, daß eine an einem LKW angeordnete Ladebrücke in horizontaler Position unter der rampenseitigen Überfahrbrücke ausreichend Platz findet. In diesen Fällen muß der ortsfeste Anlenkpunkt der Kolben-Zylinder-Einheit höher angeordnet werden, damit sich darunter ausreichend Platz ergibt. Entsprechend verringert sich der mögliche vertikale Abstand zwischen den beiden Anlenkpunkten der Kolben-Zylinder-Einheit. Bei gleichbleibendem Schwenkwinkel muß deshalb die Kolben-Zylinder-Einheit mit größerer Neigung gegenüber der Vertikalen eingebaut werden. Daraus ergibt sich eine horizontale Kraftkomponente beim Verschwenken der Brückenplatte, die das Schwenklager entsprechend belastet, so daß es stärker dimensioniert werden muß und einem erhöhten Verschleiß ausgesetzt ist.

Dieses Problem kann dadurch vermieden werden, daß man Teleskopzylinder einsetzt, die bei gleichem Hub eine geringere Einbaulänge aufweisen. Durch die teleskopartig ineinander gesteckte Zylinderkonstruktion ergeben sich jedoch über den Hubweg unterschiedlich wirksame Kolbenflächen, was in Notfällen zu gefährlichen Verhaltensweisen der Hydraulik in führt, weil bei bestimmten Hüben ein sogenannter Notstop, der hydraulisch verwirklicht ist, nicht mehr anspricht. Der Notstop dient dazu, die Brückenplatte für den Fall abzufangen, daß der Lastwagen, auf dem die Brückenplatte noch aufliegt, irrtümlich fortgefahren wird. Beim Aufliegen der Brückenplatte ist der Druckraum der Kolben-Zylinder-Einheit entlastet, so daß in diesem Fall die Brücke sich unbeabsichtigt senken würde, spräche nicht ein am Zylinder vorgesehenes Notstopventil an, das das Herausdrücken des Druckmittels verhindert.

Bei der bekannten Konstruktion stützt sich der Stufenzylinder auf einer Quertraverse ab, die den Rampenausschnitt überspannt. Da die Stützkraft in der Mitte der Traverse angreift und die Traverse auch für den Notfall ausgelegt sein muß, d.h. sie muß ein auf der Rampe befindliches belastetes Flurförderzeug auch für den Fall abfangen, daß der Notstop anspricht, wird diese Traverse besonders aufwendig ausgebildet.

Aufgabe der Erfindung ist es, eine Überfahrbrücke anzugeben, die die Nachteile der bekannten Konstruktion vermeidet.

Die Aufgabe wird dadurch gelöst, daß die Kolben-Zylinder-Einheit eine Achse aufweist, die gegenüber einer zur Schwenkachse der Brückenplatte senkrechten Ebene geneigt ist. Selbst bei beengten Platzverhältnissen kann auf Teleskopzylinder verzichtet werden, weil in der erfindungsgemäßen Einbausituation ausreichend Platz für übliche Kolben-Zylinder-Einheiten vorhanden ist. Außerdem wird das Schwenklager der Brückenplatte vorteilhaft entlastet.

Wenn zwei Kolben-Zylinder-Einheiten vorgesehen sind, deren Neigungen zu einer der Schwenkachse senkrechten Ebene entgegengesetzt geneigt sind, vorzugsweise um denselben Winkelbetrag, verringern sich die Kräfte im Schwenklager der Brückenplatte noch weiter, da sich die Reaktionskräfte an den beweglichen Anlenkpunkten die Kolben-Zylinder-Einheit teilweise aufheben.

In weiterer Ausgestaltung ist vorgesehen, daß die Kolben-Zylinder-Einheit einen ortsveränderlichen und einen ortsfesten Anlenkpunkt aufweist, wobei der ortsfeste Anlenkpunkt an einem umgebenden Rampenausschnitt eines Gebäudes befestigt ist. Dadurch lassen sich die Lagerkräfte des ortsfesten Anlenkpunktes auf kürzestem Wege in den Baukörper der Rampe einleiten, was ein geringeres Konstruktionsgewicht der Rampe ermöglicht.

Unter bestimmten konstruktiven Randbedingungen kann es vorteilhaft sein, wenn zwischen Brückenplatte und Kolben-Zylinder-Einheit ein Scherenkreuz wirkend angeordnet ist.

Falls die ortsfesten Anlenkpunkte die Kolben-Zylinder-Einheit miteinander durch eine Traverse verbunden sind, werden die Kraftkomponenten in Richtung der Traverse ausgeglichen, so daß der rampenseitige Baukörper weniger Kräfte aufzunehmen hat. Man wird dadurch unabhängig von der Qualität des rampenseitigen Betons.

Demselben Zweck dient die Maßnahme, daß die Kolben-Zylinder-Einheiten Achsen mit einem Abstand zur Traverse aufweisen und vorzugsweise dieser Abstand so ausgebildet ist, daß sich von den Kolben-Zylinder-Einheiten in die Traverse eingeleitete Torsionsmomente aufheben.

Die erfindungsgemäße Konstruktion erweist sich besonders vorteilhaft in Fällen, bei denen die Überfahrbrücke unterfahrbar ausgebildet ist.

Die bauseitigen Vorbereitungsarbeiten und der Aufwand zur Montage der Überfahrbrücke werden wesentlich verringert dadurch, daß sie einen Rahmen zum rampenseitigen Einbau aufweist, an dem Verbindungen zu den ortsfesten Anlenkpunkten der Kolben-Zylinder-Einheiten oder gegebenenfalls eine Traverse und Lager der Brückenplatte vorgesehen sind.

Wenn der ortsfeste und der ortsveränderliche Anlenkpunkt einer Kolben-Zylinder-Einheit denselben Abstand zur Schwenkachse aufweist, ergibt sich über den gesamten Schwenkbereich der Brücke ein vorteilhaft gleichmäßiger Druckverlauf im Hydrauliksystem.

Eine Dimensionierung gemäß der Vorschrift, daß die Überladebrücke eine horizontale Ruhelage aufweist, in der der ortsfeste Anlenkpunkt der Kolben-Zylinder-Einheit projiziert auf die Brückenplatte einen Abstand von der Schwenkachse aufweist, der zwischen dem minimalen und maximalen Abstand des auf die Ruhelage projizierten Abstandes des ortsveränderlichen Anlenkpunktes der Kolben-Zylinder-Einheit liegt, ergibt über den gesamten Schwenkbereich vorteilhaft geringe Kräfte im Schwenklager der Brückenplattform.

Die Erfindung wird in einer bevorzugten Ausführungsform unter Bezugnahme auf eine Zeichnung beschrieben, wobei weitere vorteilhafte Einzelheiten den Figuren der Zeichnung zu entnehmen sind. Die Figuren zeigen im einzelnen:
- Fig. 1: eine schematische perspektivische Ansicht der erfindungsgemäßen Überfahrbrücke,
- Fig. 2: eine alternative Ausführungsform der erfindungsgemäßen Brücke,
- Fig. 3: die erfindungsgemäße Brücke gemäß Figur 2 in einer Ausführung mit Rahmen und
- Fig. 4: eine weitere alternative Ausführungsform der erfindungsgemäßen Brücke mit Scherenkreuz.

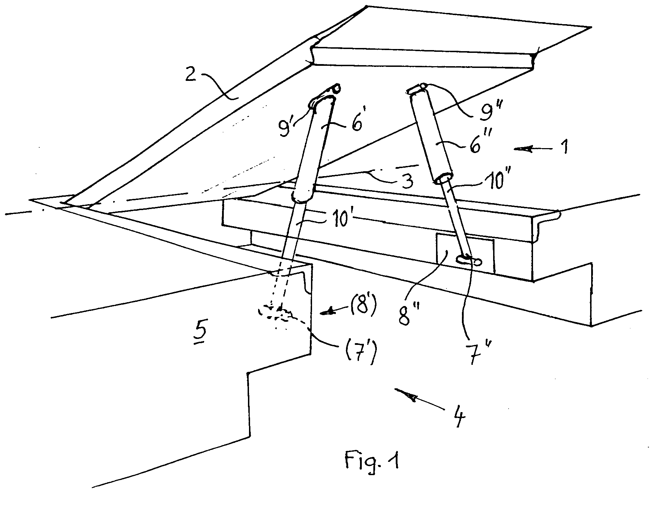

In Figur 1 bezeichnet 1 eine Überfahrbrücke, deren Brückenplatte 2 um eine strichpunktiert angedeutete Schwenkachse 3 in einem Ausschnitt 4 einer Rampe 5 gelagert ist.

Das Schwenken der Brückenplatte 2 um die Achse 3 erfolgt mittels zweier Kolben-Zylinder-Einheiten 6', 6''. Ein relativ zur Rampe 5 ortsfester Anlenkpunkt 7' bzw. 7'' der Kolben-Zylinder-Einheit 6' bzw. 6'' ist an einer Befestigungsplatte 8' bzw. 8'' vorgesehen, die innerhalb des rampenseitigen Baukörpers verankert ist, damit die auftretenden Kräfte in die Rampe 5 eingeleitet werden können.

Das andere Ende der Kolben-Zylinder-Einheit 6' bzw. 6'' mit ortsveränderlichem Anlenkpunkt 9' bzw. 9'' ist an der Brückenplatte 2 befestigt. Die zu den Kolben-Zylinder-Einheiten 6' bzw. 6'' gehörenden Kolben sind als Plunger 10' bzw. 10'' ausgebildet, wobei die Zylinder mit der Brückenplatte verbunden sind, damit eventuell vorhandene Blasen im Hydrauliköl über die am Zylinder 6 vorgesehenen Anschlußleitungen entweichen können. Der Übersichtlichkeit halber sind die entsprechenden Leitungen und das zugehörige Hydraulikaggregat mit seiner Steuerung nicht zeichnerisch dargestellt.

Dadurch, daß die ortsfesten Anlenkpunkte 7' und 7'' und ortsveränderlichen Anlenkpunkte 9' und 9'' keiner gemeinsamen Ebene senkrecht zur Schwenkachse 3 angehören, sondern die ortsveränderlichen Anlenkpunkte 9' und 9'' einen geringeren Abstand voneinander aufweisen als die ortsfesten Anlenkpunkte 7', 7'', ergibt sich eine Neigung der Zylinderachsen gegenüber einer zur Schwenkachse 3 gedachten senkrechten Ebene.

Dieser Winkel, den die Kolben-Zylinder-Einheit 6' bzw. 6'' gegenüber einer zur Schwenkachse 3 gedachten senkrechten Ebene geneigt ist, soll bei der in Figur 1 dargestellten Überfahrrampe gleich und entgegengesetzt sein. Unter dieser Bedingung ergeben sich auch gleiche aber entgegengesetzt gerichtete Reaktionskraftkomponenten in den ortsveränderlichen Anlenkpunkten 9', 9'' parallel zur Richtung der Schwenkachse 3. Diese werden in die Brückenplatte 2 eingeleitet und heben sich dort auf, so daß dadurch keine zusätzlichen Reaktionskräfte im Schwenklager mit Schwenkachse 3 ergeben. Nach den Gesetzen der Statik ergeben sich entsprechende entgegengesetzt gerichtete Lagerkräfte in den ortsfesten Anlenkpunkten 7' bzw. 7'' der Kolben-Zylinder-Einheit 6' bzw. 6'' Durch die Achsanordnung die Kolben-Zylinder-Einheit in Form eines auf dem Kopf stehenden "V" ergeben sich seitliche Führungskräfte, die eine vorteilhaft erschütterungs- und vibrationsfreie Schwenkbewegung bewirken.

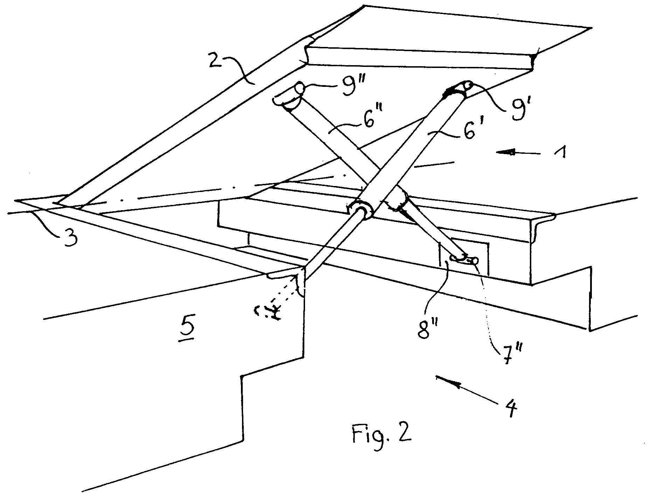

Für größere Schwenkbewegungen der Brückenplattform oder bei schmaleren Plattformen kann eine Anordnung gemäß Figur 2 vorteilhaft sein.

Bei dieser Figur 2, wie auch in den übrigen Figuren, sind funktionsgleiche Teile mit gleichen Bezugszeichen versehen. Bei der hier dargestellten Ausführungsform weisen die Verlängerungen der Achsen beider dargestellten Zylinder 6', 6'' keinen Schnittpunkt auf. Dadurch ist es möglich, auch bei längeren Zylindern oder auch bei schmaleren Rampen die Zylinder soweit gegen die Horizontale geneigt einzubauen, daß noch eine ausreichende vertikale Kraftkomponente beim Betreiben der Zylinder für die Schwenkbewegung zur Verfügung steht. Die Zylinder bei der Ausführungsform der Überladebrücke gemäß Figur 1 werden vorzugsweise in einer gemeinsamen Raumebene angeordnet.

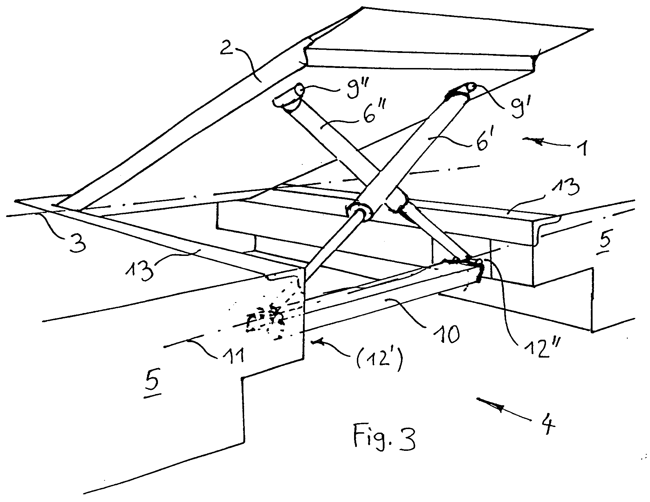

Figur 3 zeigt eine Ausführungsform, bei der zusätzlich eine Traverse 10 vorgesehen ist. Diese Traverse 10 verbindet die beiden ortsfesten Anlenkpunkte 7', 7'' der Zylinder 6', 6''. Dadurch nimmt die Traverse 10 die horizontalen Reaktionskräfte der Kolben-Zylinder-Einheiten auf, die in Richtung der Traversenachse 11 gerichtet sind. Die Horizontalkräfte in der zur Traversenachse 11 senkrechten Richtung sowie die vertikalen Komponenten der Reaktionskräfte werden von der Traverse in seitliche Ankerplatten 12', 12'' eingeleitet. Diese Ankerplatten können entweder über entsprechende Mauerwerksanker in der Rampe 5 verankert sein oder aber, wie in Figur 3 dargestellt, direkt mit einem Rahmen 13 verbunden sein, der in die Rampe 5 eingebaut ist und gleichzeitig auch die Gegenlager für die Brückenplatte 2 aufweist, damit sich die Brückenplatte 2 um Schwenkachse 3 schwenken kann.

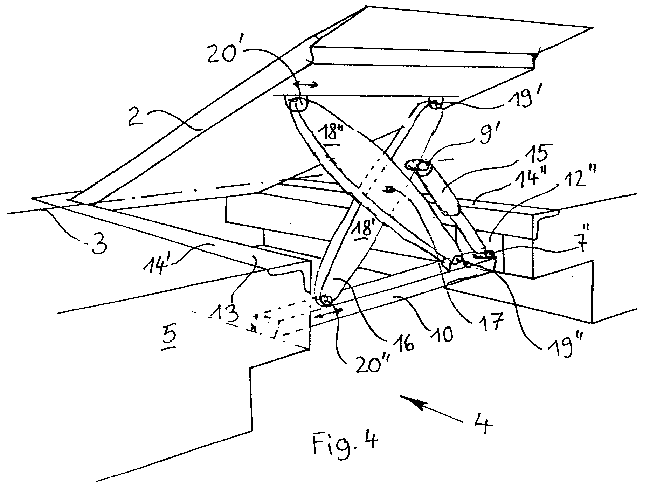

Figur 4 stellt wiederum eine Rampe mit einem Rahmen 13 dar, der den Rampenausschnitt 4 an drei Seiten einfaßt. Die Brückenplatte 2 ist auch hier um Schwenkachse 3 schwenkbar an Rahmen 13 angelenkt. Im vorderen Bereich sind die beiden seitlichen Rahmenteile 14, 14' über Ankerplatten 12, 12' und einer Traverse 10 miteinander verbunden. Statt zweier Kolben-Zylinder-Einheiten wirkt eine einzige Zylinder-Kolben-Einheit 15 auf ein Scherenkreuz 16. Es wird von zwei starren um den gemeinsamen Drehpunkt 17 schwenkbaren Hebeln 18, 18' gebildet, wobei jeweils eine Seite der Hebel einen relativ zum jeweiligen Brückenteil ortsfesten Anlenkpunkt 19', 19'' und einen ortsveränderlichen Anlenkpunkt 20', 20'' aufweist. Die Zylinder-Kolben-Einheit 15 ist mit ihrem ortsveränderlichen Anlenkpunkt 9'' am Hebel 18' zwischen Drehpunkt 17 und ortsfestem Anlenkpunkt 19' angelenkt. Dadurch ergibt sich eine Übersetzung des Hubes von Kolben-Zylinder-Einheit 15.

Selbstverständlich sind auch andere Hebelanordnung ausführbar, die ebenfalls den Hubweg über- oder untersetzen. Beispielsweise kann der Fußpunkt 7'' der Kolbenstange statt am Rahmenteil auch mit dem anderen Hebel 18'' verbunden sein.

Entgegen den im Stand der Technik bekannten Anordnungsweisen von Zylindern, die in einer zur Schwenkachse senkrechten Ebene liegen, und deshalb lediglich um eine zur Schwenkachse parallelen Achse Bewegung geschwenkt werden, erfolgt bei der erfindungsgemäß angeordneten Zylinder-Kolben-Einheit eine Schwenkung in zwei Ebenen. Vorteilhafterweise werden die Anlenkpunkte deshalb in Form von Kugelkalotten ausgebildet.

Auf diese Weise ist eine Überfahrbrücke geschaffen, die auch bei ungünstigen Platzverhältnissen den Einbau von Kolben-Zylinder-Einheiten zuläßt, die eine ausreichende vertikale Kraftkomponente aufweisen. Die Überfahrbrücke baut leichter, da die entstehenden Reaktionskräfte direkt in den umliegenden Baukörper eingeleitet werden bzw. weil sich die Kräfte teilweise gegenseitig aufheben.

### BEZUGSZEICHENLISTE

- 1: Überfahrbrücke
- 2: Brückenplatte
- 3: Schwenkachse
- 4: Rampenausschnitt
- 5: Rampe
- 6', 6'': Kolben-Zylinder-Einheit
- 7', 7': ortsfester Anlenkpunkt
- 8', 8'': Befestigungsplatte
- 9', 9'': ortsveränderlicher Anlenkpunkt
- 10: Traverse
- 11: Traversenachse
- 12', 12'': Ankerplatte
- 13: Rahmen
- 14: seitliches Rahmenteil
- 15: Zylinder-Kolben-Einheit
- 16: Scherenkreuz
- 17: Drehpunkt
- 18', 18'': Hebel
- 19', 19'': Anlenkpunkt ortsfest
- 20', 20'': Anlenkpunkt ortsveränderlich

## Patentansprüche

1. Überfahrbrücke (1) mit einer von mindestens einer Kolben-Zylinder-Einheit (6) um eine Schwenkachse (3) bewegliche Brückenplatte (2), **dadurch gekennzeichnet,** daß die Kolben-Zylinder-Einheit (6) eine Achse aufweist, die gegenüber einer zur Schwenkachse (3) der Brückenplatte (2) senkrechten Ebene geneigt ist.

2. Überfahrbrücke nach Anspruch 1, **dadurch gekennzeichnet,** daß zwei Kolben-Zylinder-Einheiten (6', 6'') vorgesehen sind, deren Neigungen zu einer der Schwenkachse (3) senkrechten Ebene entgegengesetzt geneigt sind, vorzugsweise um denselben Winkelbetrag.

3. Überfahrbrücke nach Anspruch 1 oder 2, **dadurch gekennzeichnet,** daß die Kolben-Zylinder-Einheit (6', 6'') einen ortsveränderlichen (9', 9'') und einen ortsfesten Anlenkpunkt (7', 7'') aufweist, wobei der ortsfeste Anlenkpunkt (7', 7'') an einem umgebenden Rampenausschnitt eines Gebäudes befestigt ist.

4. Überfahrbrücke nach Anspruch 1, 2 oder 3, **dadurch gekennzeichnet,** daß zwischen Brückenplatte (2) und Kolben-Zylinder-Einheit (15) ein Scherenkreuz (16) wirkend angeordnet ist.

5. Überfahrbrücke nach Anspruch 2, 3 oder 4, **dadurch gekennzeichnet,** daß die ortsfesten Anlenkpunkte (7', 7'') der Kolben-Zylinder-Einheiten (6', 6'') miteinander durch eine Traverse (10) verbunden sind.

6. Überfahrbrücke nach Anspruch 2, 3, 4 oder 5, **dadurch gekennzeichnet,** daß die Kolben-Zylinder-Einheiten (6', 6'') Achsen mit einem Abstand zur Traverse (10) aufweisen und vorzugsweise dieser Abstand so ausgebildet ist, daß sich von den Kolben-Zylinder-Einheiten (6', 6'') in die Traverse (10) eingeleitete Torsionsmomente aufheben.

7. Überfahrbrücke nach Anspruch 1, 2, 3, 4, 5 oder 6, **dadurch gekennzeichnet,** daß die Überfahrbrücke (1) unterfahrbar ausgebildet ist.

8. Überfahrbrücke nach Anspruch 1, 2, 3, 4, 5, 6 oder 7, **dadurch gekennzeichnet,** daß sie einen Rahmen (13) zum rampenseitigen Einbau aufweist, an dem Verbindungen (12', 12'') zu den ortsfesten Anlenkpunkten (7', 7'') der Kolben-Zylinder-Einheiten (6', 6'') oder gegebenenfalls eine Traverse (10) und Lager der Brückenplatte (2) vorgesehen sind.

9. Überfahrbrücke nach Anspruch 1, 2, 3, 4, 5, 6, 7 oder 8, **dadurch gekennzeichnet,** daß der ortsfeste und der ortsveränderliche Anlenkpunkt einer Kolben-Zylinder-Einheit (6', 6'') denselben Abstand zur Schwenkachse (3) aufweist.

10. Überfahrbrücke nach Anspruch 1, 2, 3, 4, 5, 6, 7 oder 8, **dadurch gekennzeichnet,** daß die Überladebrücke (1) eine horizontale Ruhelage aufweist, in der der ortsfeste Anlenkpunkt (7', 7'') der Kolben-Zylinder-Einheit (6', 6'') projiziert auf die Brückenplatte (2) einen Abstand von der Schwenkachse (3) aufweist, der zwischen dem minimalen und maximalen Abstand des auf die Ruhelage projizierten Abstandes des ortsveränderlichen Anlenkpunktes (9', 9'') der Kolben-Zylinder-Einheit (6', 6'') liegt.

11. Überfahrbrücke nach einem oder mehreren der vorhergehenden Ansprüche, **dadurch gekennzeichnet,** daß die Anlenkpunkte der Kolben-Zylinder-Einheit (6', 6'') als Teile einer Kugel in einer Kalotte ausgebildet sind.
